# NEW EUROPEAN PATENT SPECIFICATION

(11) **EP 0 118 282 B2**
(45) Date of publication and mention of the opposition decision: **28.09.1994**
(45) Mention of the grant of the patent: 03.05.1989
(21) Application number: 84301308.7
(22) Date of filing: 29.02.1984
(51) Int. Cl.: B23K 3/02

(54) **A soldering tool**
Lötwerkzeug
Outil de soudure

(30) Priority: 02.03.1983 IE 44283
(43) Date of publication of application: 12.09.1984
(73) Proprietor: OGLESBY & BUTLER TECHNOLOGY LIMITED, Plassey Technology Park Limerick (IE)
(72) Inventor: Oglesby, Alfred Peter, Carlow Co. Carlow (IE); Oglesby, Elizabeth Anne, Carlow Co. Carlow (IE); Oglesby, John Paul, Carlow Co. Carlow (IE); Butler, Derek William, Carlow Co. Carlow (IE)
(74) Representative: Geyer, Werner, Dr.-Ing.

(56) References cited:
- DE-B- 1 253 020
- DE-C- 9 602
- US-A- 4 133 301

## Description

The present invention relates to a soldering tool comprising an elongated handle housing forming a reservoir means for fuel, a soldering tip connected to the handle housing, the soldering tip comprising a tip portion and a tip housing extending rearwardly towards the handle housing from the tip portion, which provides a combustion chamber in which a catalytic element is located, means for supplying fuel to the catalytic element to heat the soldering tip, means for relatively evenly distributing fuel to the catalytic element, and a heat conducting means located within and extending through the combustion chamber to the tip portion for conducting heat from the combustion chamber to the tip portion, the handle housing defining a duct for supplying fuel from the reservoir means to the fuel supply means, and isolating means being provided in the handle housing for selectively supplying and isolating fuel from the reservoir means to the fuel supply means.

A gas powered soldering tool of this type is described in United States Patent Specification No. 4 133 301. In this construction gas is delivered to a catalytic combustion element located in a combustion chamber. One end of the chamber is closed by a soldering tip which carries a conductor rod having a heat treating soldering tip at its outer end and the chamber is enclosed by a substantially cylindrical outer casing which extends rearwardly to the main body of the device and the handle. Various embodiments are shown in which the combustion chamber which is substantially annular and in some constructions the soldering tip rod extends into the combustion chamber and in others the centre of the combustion chamber is hollow to allow for distribution of the fuel. Various forms of catalytic combustion element are described including a two part element.

In all the constructions described a combustion chamber is connected to the main body of the apparatus and/or the handle by the combustion chamber outer casing.

In operation the combustion element heats up and heats the outer casing so that the heat is transferred to the soldering tip. In some constructions an extension of the tip within the combustion chamber is heated but with these constructions there is no provision for extended or even distribution of the fuel within the catalytic element. Thus only poor conversion of the gas to heat is achieved in these devices. A disadvantage of the constructions shown in this Patent is that because the combustion chamber is connected to the main body of the device and/or the handle by the outer casing there is great heat loss through the outer casing to the handle and due to the fact that in the constructions in which there is means for distributing the fuel throughout the length classic element the main heat transfer is via the outer casing to the soldering tip so that again there is great heat loss due to the outer casing being exposed to atmosphere on its outer surface.

Thus this device and other known devices tend to be relatively inefficient in use, in that because of the high heat loss from the outer cylindrical member, both a large quantity of fuel is required to heat the tip and also a large catalytic combustion element is also required. This further leads to a relatively bulky and cumbersome apparatus.

German Auslegeschrift No. 1,253,020 discloses a gas powered soldering tool which comprises a soldering tip heated by a flame. A combustion chamber is formed in the soldering tip rearwardly of a soldering portion of the soldering tip. A pipe extending from the handle into the combustion chamber delivers gas into the combustion chamber through substantially forwardly directed bores adjacent the soldering portion of the soldering tip. Gas is burnt as a flame in the combustion chamber. Since the soldering tip is heated by a flame, a relatively large combustion chamber is required, thus requiring a relatively large soldering tip. This leads to a relatively cumbersome construction of soldering tip and soldering tool.

U.S. Patent Specification No. 2,807,317 discloses a gas powered soldering tool which comprises a soldering tip heated by a flame. A combustion chamber is formed in the soldering tip rearwardly of a soldering tip portion of the soldering tip. A pipe delivers gas through a forwardly directed jet into the combustion chamber for burning as a flame. The soldering tip is mounted on the pipe by a portion of the soldering tip which extends rearwardly of the combustion chamber and engages the pipe. This soldering tool suffers from substantially similar disadvantages to those associated with the soldering tool in German Auslegeschrift No. 1,253,020.

U.S. Patent Specification No. 4,119,088 discloses a gas powered soldering tool which is substantially similar to the gas powered soldering tool of U.S. Patent Specification No. 2,807,317. The soldering tool of U.S. Patent Specification No. 4,119,088 comprises a soldering tip heated by a flame. A combustion chamber is formed in the soldering tip rearwardly of a soldering tip portion of the soldering tip. A pipe delivers gas into the combustion chamber for burning as a flame. The soldering tip is mounted on the pipe by a portion of the soldering tip which extends rearwardly of the combustion chamber and engages the pipe. This soldering tool suffers from substantially similar disadvantages to those associated with the soldering tool disclosed in German Auslegeschrift No. 1,253,020.

The present invention is directed towards providing a gas powered soldering tool which overcomes the problems of these known soldering tools, and, in particular, is relatively efficient in use, has a relatively small and compact size and can easily be operated.

The present invention overcomes the problems of soldering tools known heretofore by virtue of the fact that the soldering tool comprises an elongated handle housing forming a reservoir means for fuel, a soldering tip connected to the handle housing, the soldering tip comprising a tip portion and a tip housing extending rearwardly towards the handle housing from the tip portion, which provides a combustion chamber in which a catalytic element is located, means for supplying fuel to the catalytic element to heat the soldering tip, means for relatively evenly distributing fuel to the catalytic element, and a heat conducting means located within and extending through the combustion chamber to the tip portion for conducting heat from the combustion chamber to the tip portion, the handle housing defining a duct for supplying fuel from the reservoir means to the fuel supply means, and isolating means being provided in the handle housing for selectively supplying and isolating fuel from the reservoir means to the fuel supply means, where the heat conducting means is connected directly to the fuel supply means for delivering fuel to the combustion chamber and forms an internal support which solely carries the soldering tip, and the isolating means comprises a sealing member sealing an orifice through a transverse member in the duct, the orifice communicating with the reservoir means, a carrier mounted in the duct and carrying the sealing member, the carrier having a bore extending from the isolating means for accommodating the passage of fuel gas therethrough, the carrier being slidable longitudinally in the duct from a position with the sealing member spaced apart from the orifice to a position sealing the orifice, the carrier being operable by a camming member which is slidable in the duct and extends around the carrier, and a thumb operated slider slidable longitudinally in the handle housing being co-operable with the camming member for sliding the carrier in the duct.

The advantages of the invention are many. However, one of the main and most important advantages is that the invention provides a relatively efficient soldering tool and also a soldering tool in which the tip can be of relatively small and compact size. This is achieved due to the soldering tip being soley carried by the internal support so that a considerable quantity of heat from the catalytic combustion element is conducted through the support into the soldering tip. There is no danger of any heat loss to the surrounding air from the support. Furthermore, because of the high heat transfer efficiency, a relatively small catalytic combustion element can be used, and accordingly, the soldering tip can be retained to a fairly compact size. Furthermore, a relatively even distribution of gas is achieved through the catalytic combustion element.

Further advantages of the invention are that the soldering tool may be operated with only one starting action. All that is required is to deliver gas to the combustion element, and ignite the gas passing through the element The catalytic element is then bought to its normal operating temperature, and the flames go out and the catalytic element continues to burn the gas. This, it will be appreciated, overcomes the major problem of soldering tools known heretofore, where it has been necessary to switch off the gas to quench the flame after the element has been brought to heat, and then switch on the gas again. A further advantage of the invention is that because a permeable catalytic element is used, the element can be considerably smaller than those used heretofore, thereby lending itself to a relatively neat compact soldering tool.

Further, because it is relatively neat and compact, the soldering tool is relatively easily handled.

Preferably the combustion chamber is annular and surrounds the internal support.

In a convenient construction the internal support is mounted on a fuel supply pipe which acts to connect the soldering tip and combustion chamber to the handle housing, and the fuel supply pipe can be releasably connected to the handle housing, thus allowing the easy fitting of alternative or replacement tips, which is a further advantage over the known devices.

In a preferred construction the fuel supply pipe is releasably held in place in the handle housing by a screw threaded gland member.

A removable cover may be provided to cover the soldering tip and releasably engagable with the handle housing, which permits the tool to be left lying on a bench whilst the tip is still hot.

Due to the particular construction the overall dimensions of the device can be small enough to fit into a normal sized pocket in the user's clothing, and thus the cover can be provided with a pocket clip.

Moreover, the cover can incorporate a manually operable ignitor mechanism for the fuel.

Preferably, the reservoir means is a refillable reservoir.

The handle can house means for mixing air with the fuel gas, and means for regulating the flow of the fuel gas.

The advantage of this feature of the invention is that it provides a relatively compact and easily handled soldering tool.

Preferably, the carrier is spring biased in an upstream direction towards the orifice, and the camming member is provided by a cylindrical sleeve, the downstream end of which bears on a radial face extending from the carrier, and the other end of the cylindrical sleeve terminating in a helical camming surface bearing on a corresponding camming surface on the handle housing, and the thumb operated slider member is co-operable with the camming member by a spud extending from the outer surface of the cylindrical sleeve, the spud being engagable with a helical groove in the thumb operated slider member.

Preferably, the cover abuts the thumb operated slider, to retain the slider with the carrier in the closed position.

The advantage of this feature of the invention is that it ensures the cover is in place, thereby avoiding gas leakage.

In one embodiment of the invention, the internal support is in the form of a hollow manifold, and the means for relatively evenly distributing the fuel from the internal support through the catalytic element comprises a plurality of radial holes in the hollow manifold and corresponding exhaust outlets for exhausting burnt gases located at 60 _{°} intervals around the housing.

The advantage of this feature of the invention is that it further ensures relatively even distribution of fuel throughout the catalytic combustion element.

In one embodiment of the invention, the catalytic element comprises platinum placed quartz wool, which is of relatively low cost and produces an efficient catalytic element.

The invention will be more clearly understood from the following description of a preferred embodiment thereof, given by way of example only, with reference to the accompanying drawings, in which:

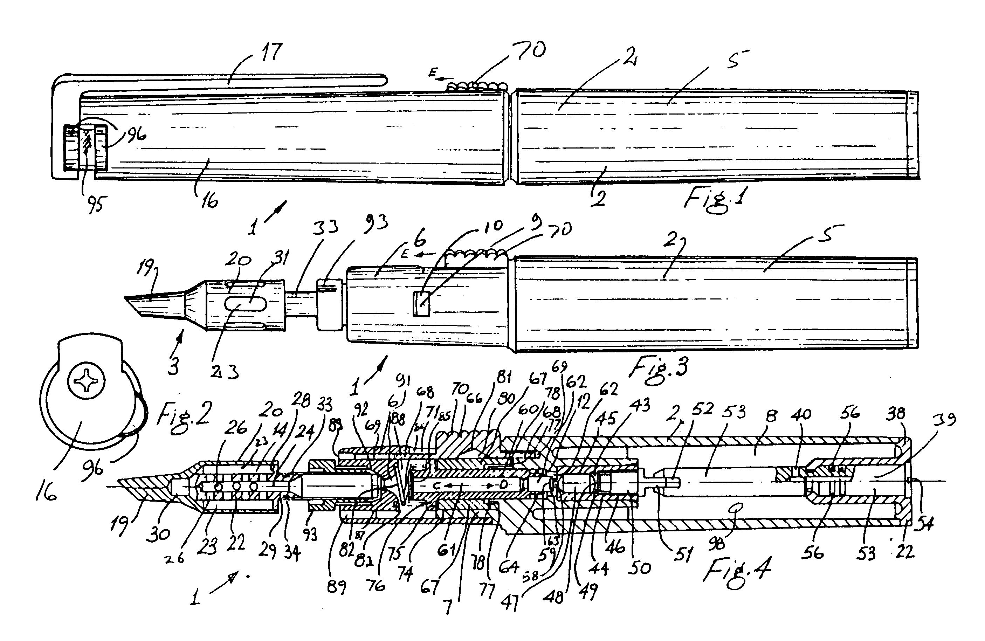

Fig. 1 is a side elevational view of a soldering tool according to the invention,
Fig. 2 is an end view in the direction of the arrow A of Fig. 1 of the soldering tool,
Fig. 3 is a side elevational view of the soldering tool of Fig. 1 with the cover removed from the tool,
Fig. 4 is a sectional side view of the soldering tool of Fig. 1 with the cover removed,
Fig. 5 is an enlarged sectional side view of portion of the soldering tool of Fig. 1,
Fig. 6 is a side elevational view of portion of the soldering tool of Fig. 1,
Fig. 7 is a sectional side view of the portion of the tool illustrated in Fig. 6,
Fig. 8 is a side elevational view of another portion of the soldering tool of Fig. 1,
Fig. 9 is a sectional side view of the portion of Fig. 8,
Fig. 10 is a partly sectional side elevational view of another portion of a soldering tool of Fig. 1,
Fig. 11 is a sectional side view of the portion of Fig. 10,
Fig. 12 is a plan view of the portion of Fig. 10,

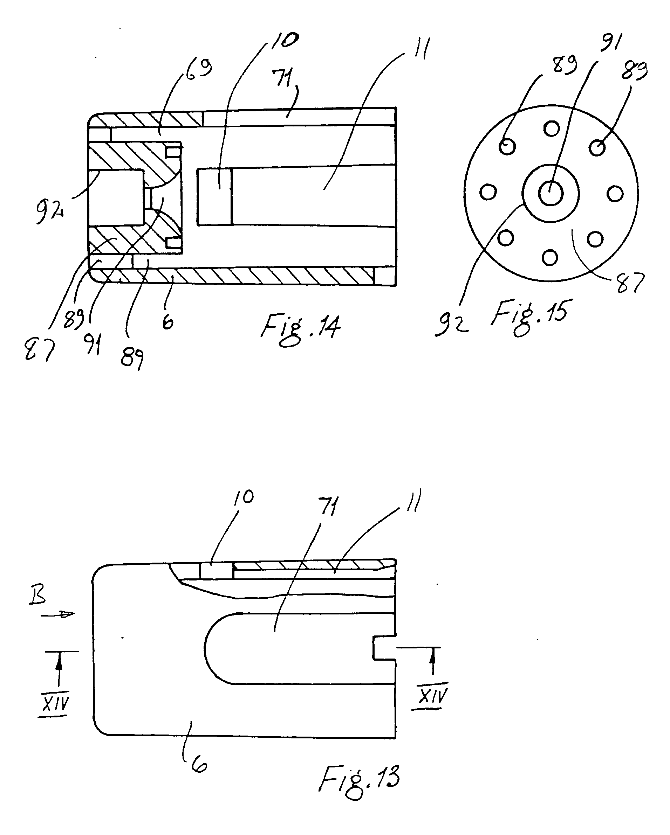

Fig. 13 is a partly sectional plan view of another portion of the soldering tool of Fig. 1,
Fig. 14 is a sectional side view of the line XIV-XIV of the portion of Fig. 13,
Fig. 15 is an end view of the portion of Fig. 13 in the direction of the arrow B of Fig. 13,
Fig. 16 is plan view of another portion of the soldering tool of Fig. 1,
Fig. 17 is a sectional side view of the portion of Fig. 16 on the line XVII-XVII,
Fig. 18 is a side elevational view of another portion of the soldering tool of Fig. 1,
Fig. 19 is a plan view of the portion of Fig. 18,
Fig. 20 is an end view of the portion of Fig. 18,
Fig. 21 is a side elevational view of another portion of the soldering tool of Fig. 1,
Fig. 22 is a plan view of the portion of Fig. 21,
Fig. 23 is an underneath plan view of the portion of Fig. 21,
Fig. 24 is an end view of the portion of Fig. 21,
Fig. 25 is a sectional view of another portion of the soldering tool of Fig. 1,
Fig. 26 is a side elevational view of another portion of the soldering tool of Fig. 1,
Fig. 27 is a plan view of the portion of Fig. 26,
Fig. 28 is an end view of a further portion of the soldering tool of Fig. 1, and
Fig. 29 is a perspective view of a cover of the soldering tool of Fig. 1.

Referring to the drawings, there is provided a gas powered soldering tool according to the invention, in this case, a portable soldering tool indicated generally by the reference numeral 1. The soldering tool 1 comprises a handle 2 and a soldering tip 3. The handle 2 having outer walls formed by a hollow upstream casing 5 and a hollow downstream casing 6 of plastics material, joined together at 7 by a pair of clips 9 extending from the casing 5 which engage corresponding openings 10 in the casing 6. Lead grooves 11 in the casing 6 directs the clips 9 into the openings 10 for ease of assembly. A reservoir 8 for liquid fuel gas is formed in the upstream casing 5. A duct 12 through the upstream casing 5 and the downstream casing 6, delivers gas as will be described below, to a gas catalytic combustion element 14 which heats the soldering tip 3. A cover 16 releasably engages the handle 2, to cover the soldering tip 3, and a pocket clip 17 is provided for clipping the soldering tool to a breast pocket.

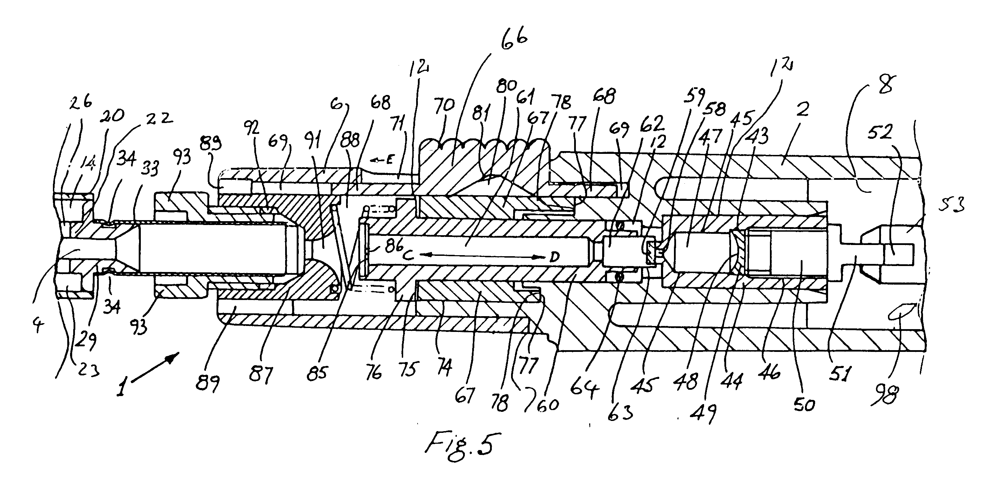

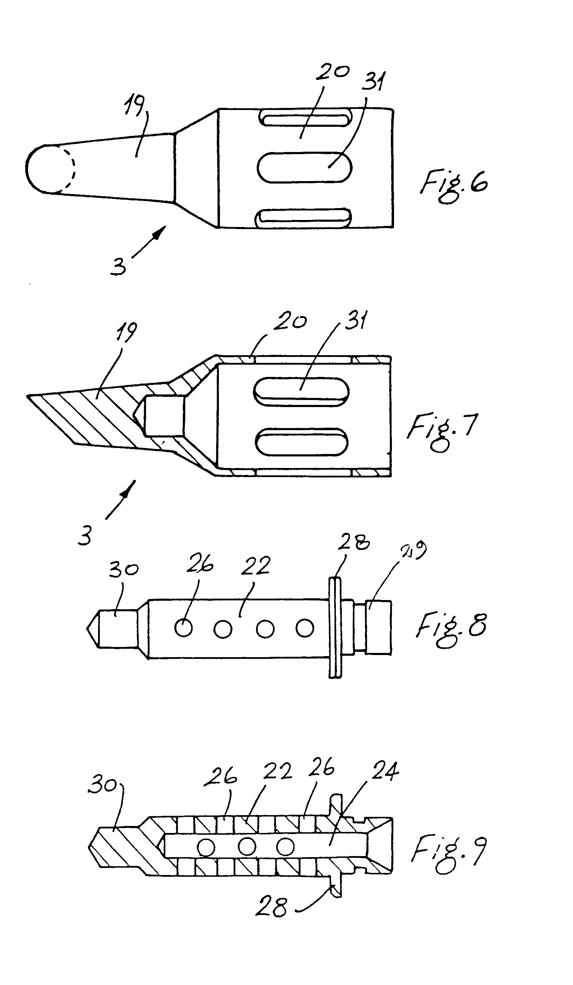

Dealing now with the soldering tip 3 and catalytic element 14. These are clearly illustrated in Figs. 3 and 4 and Figs. 6 to 9. The soldering tip 3 is of copper and comprises a soldering tip portion 19 and a rearwardly extending cylindrical housing 20. An internal support in the form of a brass manifold 22 which, together with the housing 20, forms an annular combustion chamber 23 for the catalytic element 14. The manifold 22 is cylindrical, and gas is delivered through the inner bore 24 through radial holes 26, into the chamber 23. A flange 28 at one end of the manifold 22, closes the chamber 23 against the cylindrical housing 20 of the tip 3. A stainless steel pipe 33 crimped at 34 onto a free end 29 of the manifold 22 is the sole means of connecting the manifold and the soldering tips to the handle 2, as will be described below. The other end 30 of the manifold 22 extends into the tip 3 to increase heat transfer. The catalytic element 14 is permeable, and in this case comprises platinum plated quartz wool and is mounted in the chamber 23. Gas on passing through the catalytic element 14 burns.

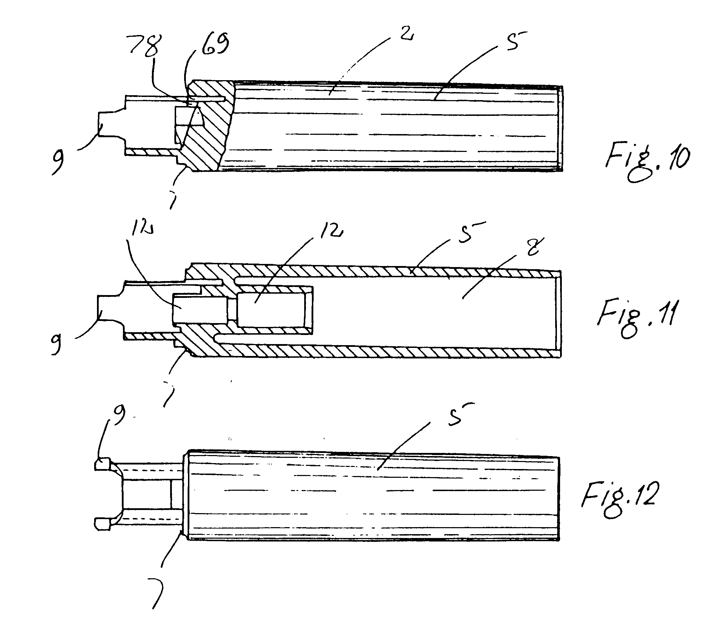

Exhaust outlets 31 in the cylindrical housing 20 of the soldering tip 3 disperse burnt gas. In this case the outlets 31 are provided at 60 around the housing 20 to ensure, in combination with the radial holes 26 of the manifold 22, a full and even distribution of gas through the catalytic element 14. Heat from the catalytic element is conducted to the soldering tip 3 through the cylindrical housing 20, and also through the portion 29 of the manifold 22. Thus, maximising the heat transfer into the soldering tip 3. The upstream casing 5 is illustrated in Figs. 3, 4, 10 and 11. An end cap 38 of plastics material welded to the casing 5 closes the casing 5 and forms the reservoir 8. A filling valve 39 is provided in the end cap 38, to deliver liquid fuel gas into the reservoir 8 through an inlet 40. Such a filling valve will be well known to those skilled in the art, and it is not intended to describe it in detail in this specification.

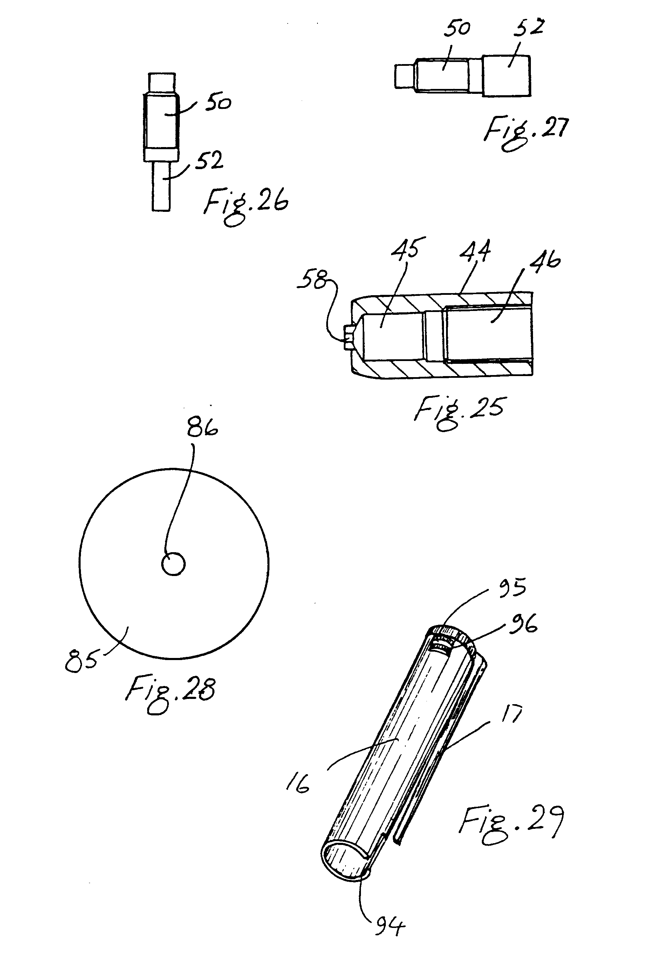

A means to regulate the flow of gas to the manifold 22 is provided at 43 in the duct 12 in the upstream casing 5. The regulating means comprises a bush 44 of brass which is a press fit in the duct 12. The gas flows through a bore 45 in the bush 44. A porous member, in this case a cintered bronze filter 47 with a domed end 48 is mounted in one end of the bore 45 of the bush 44. The other end 46 of the bore 45 is partly threaded. A non porous member, in this case a resilient disc seal 49, of silicone rubber, is loosely mounted in the bore 45, and kept in contact with the domed end 48 of the filter 47 by a screw 50. The screw 50 loosely engages the threads 46 and permits the passage of gas along the threads to the filter 47. The seal 49 being loose in the bore 45 also allows the passage of gas to the filter 47. The bush 44 and screw 50 are illustrated in Figs. 24 to 26.

A flat portion 51 on the screw 50 engages a slot 52 on a shaft 53, which is rotatable in the end cap 38. A screwdriver slot 54 is provided at the end of the shaft 53. Sealing rings 56 in the end cap 38 prevent leakage of gas along the shaft 53. On rotation of the screw 50 by the shaft 53, the disc seal 49 is deformed onto the domed end 48 of the filter 47. As the seal 49 is progressively deformed, the surface area of the domed end 48 through which gas may pass, is reduced, thereby decreasing the flow of gas. Decreasing or increasing this area by tightening or loosening the screw 50, thus regulates the flow of gas from the reservoir 8. An orifice 58 from the bore 45 in the bush 44 permits gas to exit through the other end of the filter 47.

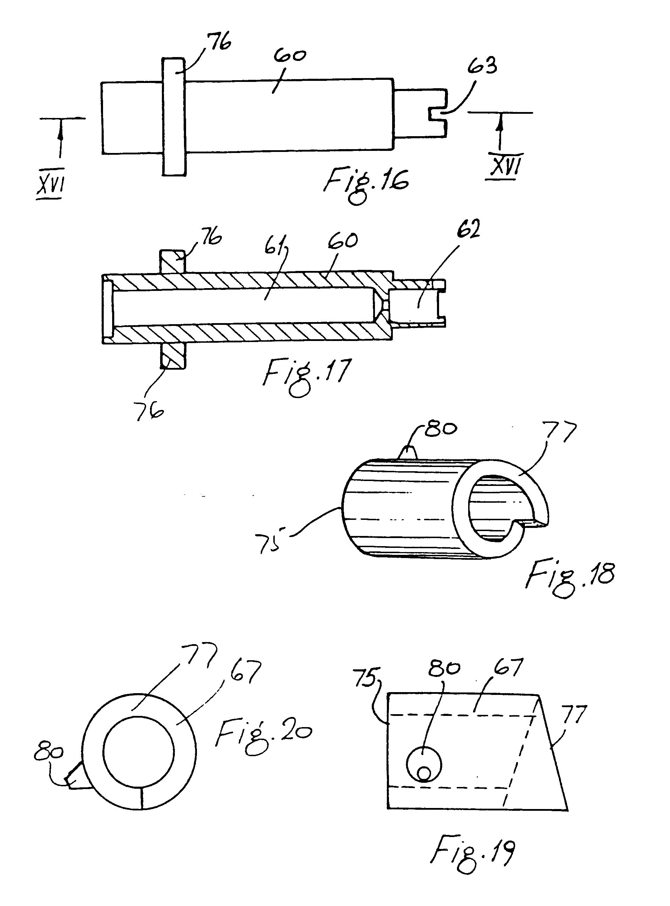

A means to isolate the flow of gas to the manifold 22 is provided by a sealing member, in this case, a silicone disc seal 59, which seals against the orifice 58. The disc seal 59 is mounted on a carrier 60, slidable in the duct 12 of the upstream casing 5, for moving the disc seal towards and away from the orifice 58 to effect sealing. The carrier 60, as well as being illustrated in Figs. 4 and 5, is also illustrated in detail in Figs. 17 and 18. A compression spring 82 acts between a radial flange 76 on the carrier 60, and the downstream casing 6 to bias the carrier 60, and in turn the disc seal 59 towards the orifice 58. The carrier 60 is of brass and hollow, having a central bore 61 through which the gas passes. A cintered bronze filter 62 mounted in the carrier 60 adjacent the disc seal 59, further filters the gas as it passes through the carrier 60. A plurality of radial openings 63 in the carrier 60, allow gas to enter the bore 61 through the filter 62. An O-ring seal 64 prevents the passage of gas between the carrier 60 and the side of the duct 12.

The carrier 60 is operable in the direction of the arrows C and D by a thumb operated slider 66. which operates a camming member 67. The slider 66 of nylon is slidable in the upstream and downstream casings 5 and 6, by means of a base 68 which engage corresponding slots 69 in the casings 5 and 6. A thumb portion 70 extends through a slot 71 in the outer walls of the upstream and downstream casings 5 and 6.

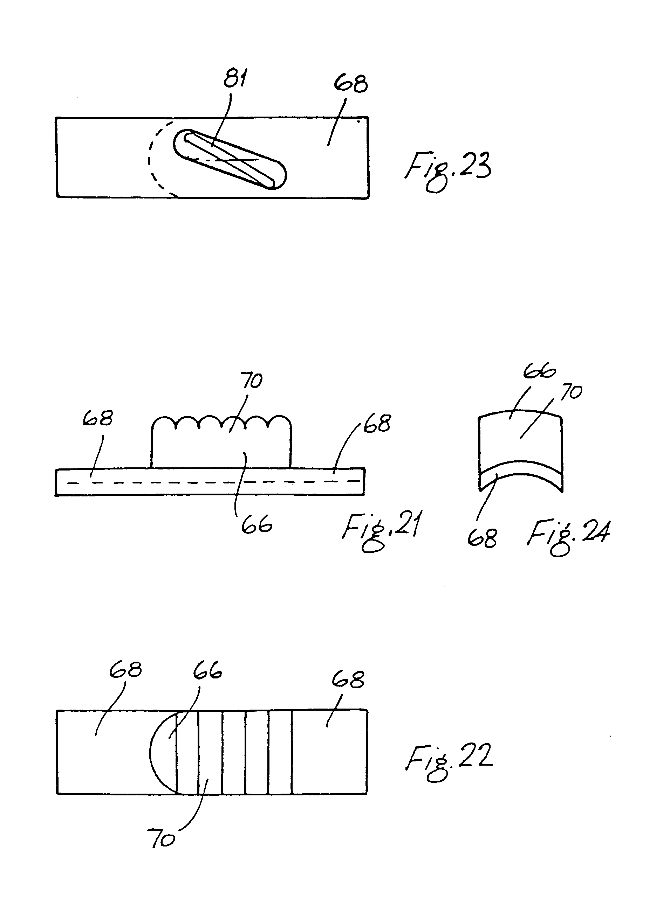

Both the camming member 67 and thumb slider 66, as well as being illustrated in Figs. 4 and 5, are also illustrated in detail in Figs. 18 to 24. The camming member 67 is a cylindrical sleeve of nylon slidable and rotatable in the casing 5. The camming member 67 is also rotatable on the carrier 60. One end 75 of the camming member 67, engages the radial range 76 on the carrier 60. The other end of the camming member 67 terminates in a helical camming surface 77, which bears on a corresponding helical camming surface 78 in the housing 5. A spud 80 on the outer surface of the camming surface 67, engages a slightly helical groove 81 in the slider 66. On movement of the slider 66 in the direction of the arrow E, the camming member 67 is rotated by virtue of the engagement of the spud 80 in the groove 81 of the slider 66. This rotation causes the camming surfaces 77 and 78 to interact, thereby moving the camming member 67, and in turn the carrier 60 in the direction of the arrow C, thus lifting the disc seal 59 from the orifice 58 to permit the flow of gas. Reverse movement of the slider 66 closes off the flow of gas.

A disc 85 of stainless steel, is pressed into the carrier 60 at the downstream end of the bore 61. An orifice 86 in the disc 85 forms a jet through which gas is delivered into the duct 12 in the downstream casing 6. The downstream end of the casing 6 is closed, thus forming an end cap 87. As can be seen in Fig. 5, the carrier 60 terminates just short of the end cap 87, thereby providing an annular opening 88 between the carrier 60 and the end cap 87. This acts as a means for mixing air with the fuel gas. A plurality of circular bores 89 through the end cap 87, deliver air into the annular opening 88. An outlet 91 for the gas/air mixture is provided in the end cap 87, and as can be seen in Fig. 5, it converges in a downstream direction, thereby forming a venturi. As gas exits through the orifice 86, it mixes with the air coming in through the annular opening 88, and thereby proceeds through the venturi outlet 91. The outer end 92 of the outlet 91 is threaded to receive a screw threaded gland member in the form of a collet 93 for securing the tube 33 in the end cap 87. The gas/air mixture is thus delivered from the outlet 91 through the tube 33 into the manifold 22.

Dealing now with the cover 16, the cover is clearly illustrated in Fig. 29. A slot 94 is provided in the cover 16 to abut the slider 66. When the cover 16 is in position on the handle 2, the slot 94 retains the slider 66 in the closed position, namely, with the carrier 60, and in turn the disc seal 59 closing the orifice 59. A flint ignition mechanism 95 is provided at the other end of the cover 16 for igniting the gas in the catalytic element 14. Thumb operated wheels 96 operate the flint mechanism 95 to produce sparks. Such flint ignition mechanisms are well known to those skilled in the art, and it is not intended to deal with this mechanism in further detail.

A charcoal filter 98 is provided in the reservoir 8 to remove any impurities from the liquid gas.

In use, the reservoir is filled with liquid butane gas, for example, the type used in cigarette lighters. The cover 16 is removed from the handle 2. The slider member 66 is moved in the direction of the arrow E, thereby opening the orifice 58 and permitting gas to flow from the reservoir 8 to the manifold 22. The flint mechanism is held adjacent the exhaust outlets 31, and sparks are generated. The sparks ignite the gas passing through the outlets 31, and the catalytic element 14 is brought up to its operating temperature. Once the catalytic element reaches normal operating temperature, the flames automatically go out, and the catalytic element burns the gas. Heat is thereby transferred from the catalytic element through the cylindrical portion 20 and the manifold 22 into the soldering tip 19, and the tool is ready for soldering. In the present embodiment of the invention, it has been found in general that the catalytic element reaches normal operating temperature within 20 seconds.

Where too much or too little gas flows to the element 14, the gas flow is regulated by means of the regulator 43. By rotating the shaft 53, the domed area 48 of the filter 47 covered by the seal 49 is varied, thereby varying the flow of gas to the element 14.

By varying the flow of gas to the element, the element glows at a brighter or darker shade. In general, the element glows red, and at its maximum heat it glows a bright red, while at a lower heat it glows a dark red, and in fact, in some cases, it has been found that the glow is hardly perceptible at all. The disadvantage of this is that by inspecting the shade of the colour, an operator can readily easily assess the temperature at which the tip is. In fact, it is envisaged in certain cases, that a shade card, indicating the corresponding temperatures, may be provided with the soldering iron, or attached to the handle. This would permit an operator to readily easily assess the temperature of the tip of the tool.

The soldering tool is switched off by moving the slider member 66 in an upstream direction, namely, the direction of the arrow D to the position illustrated in Figs. 3 and 4. The cover 16 is then placed over the tip onto the handle 2. Alternatively, the soldering tool 1 may be switched off by merely pressing the cover onto the handle 2, and the slot 94 thereby moves the slider 66 into the closed position.

While the soldering tool of the present invention has many advantages over soldering tools known heretofore, one of the main advantages of the tool is that it can be operated, and in particular started, without any difficulty. All that is required is to place a spark or match to the gas as it exits through the exhaust outlets 31 in the tip 3. There is no need to switch the gas on and off to convert the burning phase of the gas from a flame to a glow in the catalytic element. This is mainly achieved by virtue of the fact that a permeable gas catalytic element has been used.

Additionally, while a particular type of permeable catalytic combustion element has been described, other suitable permeable catalytic elements could be used. For example, other platinum plated carriers could be used, or other carriers plated with other gas reactive metals could be used. Furthermore, platinum or other gas reactive metals could be used without a carrier, or other metals which cause a catalytic reaction with gas, could similarly be used. In fact, it is envisaged in certain cases, that a ceramic catalytic element could be used, provided that the ceramic element was porous, to permit passage of gas through the element.

Additionally, it will be appreciated that soldering tips of other shapes and configurations and materials could be used besides that described. Additionally it is not necessary for the exhaust outlets in the portion 20 of the soldering tip to be arranged at 600. In fact, they could be arranged at any suitable position. Indeed, in certain cases it is envisaged that only one exhaust outlet may be provided. Although, the advantage of having more than one is that it improves dispersion of the gas through the catalytic element. Indeed, it will be appreciated that exhaust outlets of other shapes and configurations, may be used. In fact, it is envisaged in certain cases, that the outlet may be a continuous helical slot extending over the surface of the portion 20.

Further, it will be appreciated that it is not necessary for the manifold forming the internal support to have a plurality of holes, one outlet is all that is required.

It will of course be appreciated that other suitable shapes and configurations of handle, or indeed casing, could be used. Needless to say, other shapes and configurations of reservoir could be used.

It is envisaged in certain cases that the means to regulate the flow of gas could be dispensed with altogether, or other suitable means to regulate the gas flow could be used.

Alternatively, other camming members could be used. Additionally, it will be appreciated that while the slider has been provided in a particular position on the handle, it could be provided in any other suitable position.

It is further envisaged that instead of mixing the fuel gas and air as described, other suitable mixing arrangements could be used. In fact, in certain cases it is envisaged that mixing may be done directly in the neck of a venturi.

It will of course be appreciated that while a flint ignition mechanism has been provided to ignite the catalytic element, any other suitable ignition means could be used, for example, a piezoelectric ignition means could be provided. In which case, it is envisaged that the piezoelectric ignition mechanism may be activated by the slider 66, although needless to say, this would not be necessary. Other suitable ignition mechanisms will readily be apparent to those skilled in the art. Indeed, it is envisaged in certain cases, that the ignition mechanism may be dispensed with altogether, and an operator could ignite the gas by, for example, a match, or any other naked flame.

While the soldering tool has been described for use with liquid butane gas, it will be appreciated that it could be used with any other suitable gas. In fact, it is envisaged in certain cases, that it is not necessary that the gas is provided in liquified form, it could be provided in compressed form.

It will of course be readily apparent to those skilled in the art, that the soldering tool could also be used for desoldering.

Furthermore, while the reservoir has been described as being formed in the handle or any other arrangement of reservoir could be used. Additionally, it will be appreciated that the soldering tool could be arranged to receive a prepacked gas reservoir, for example, a miniature gas cylinder which could, for example, be fitted into a suitable compartment in the handle, or could form part of the handle.

Further, it will be appreciated that while a screwdriver slot has been provided in the shaft 53 for regulating the flow of gas through the regulator, any other arrangement could be used, for example, it is envisaged that a knob, or thumb wheel may be provided on the end of the shaft 53. Further, in certain cases, it is envisaged that the thumb wheel may be provided by a ring extending around the handle intermediate the ends thereof. Indeed, it will be appreciated by those skilled in the art, that any suitable means for adjusting the regulator, could be provided.

Further, it will be appreciated that while the means to regulate the flow of gas, the means to isolate the flow of gas, and the means for mixing gas with air, have been described as being provided in a particular sequence in the handle, any other sequence could be used. In fact, it is envisaged in certain cases, that the gas may be regulated after the isolating means, and in certain cases, the gas and air may be mixed before regulation or isolation. Indeed, in certain cases, it is envisaged that the isolating means could in fact, if made sensitive enough, act as a regulating means, and vice versa.

Additionally, it is envisaged that while the means to regulate the flow of gas to the catalytic element has been described as a resilient seal progressively closing the domeshaped end of the filter, other suitable arrangements of a resilient member and a porous member may be used, without departing from the scope of the invention. For example, it is envisaged that the porous member could be provided by a filter with a flat end, and the resilient member could have a domeshaped end. As the resilient member is compressed, this would have the same effect in progressively sealing the end of the filter. Furthermore, it is envisaged that in certain cases the porous member could be resilient, and the non porous member, in other words, the sealing member, may be rigid. Again, with suitable confgurations of the porous and non porous member, a similar sealing effect could be achieved. Further, it is envisaged that the porous member, instead of being provided by a filter, could be merely provided by a domeshaped member which would have a plurality of holes, to permit the passage of gas therethrough, or it could be any other domeshaped permeable membrane. Indeed, it is envisaged that in certain cases, the progressive sealing effect could be achieved without having either the porous or non porous member domeshaped. For example, if one of the two adjacent faces of each member were arranged at an angle to the other adjacent face, then a progressive sealing effect could also be achieved.

It is envisaged also that in certain cases the soldering tip and the internal support could be formed integrally together, in other words, manufactured from a single piece of material, by, for example, machine or casting. Indeed, it will be appreciated that if desired, the internal support could be arranged to connect directly into the handle portion. Needless to say, whether the support was connected directly into the handle portion, or was connected by means of a connecting pipe, the connection could be a rigid fixed connection, or a releasable connection. Needless to say, the advantage of having the tip releasably connected to the handle, is that firstly, it facilitates replacement of a spent catalytic element, in that the entire tip and manifold portion could be dispense and replaced. And secondly, it has the advantage that it permits different shape and size soldering tips to be used in the same handle portion.

## Claims

1. A soldering tool comprising an elongated handle housing (2,5,6) forming a reservoir means (8) for fuel, a soldering tip (3) connected to the handle housing (2,5,6), the soldering tip (3) comprising a tip portion (19) and a tip housing (20) extending rearwardly towards the handle housing (2,5,6) from the tip portion (19), which provides a combustion chamber (23) in which a catalytic element (14) is located, means (33) for supplying fuel to the catalytic element (14) to heat the soldering tip, means (26,31) for relatively evenly distributing fuel to the catalytic element, and a heat conducting means located within and extending through the combustion chamber (23) to the tip portion (19) for conducting heat from the combustion chamber (23) to the tip portion (19), the handle housing (2,5,6) defining a duct (12) for supplying fuel from the reservoir means (8) to the fuel supply means (33), and isolating means (58,59) being provided in the handle housing (2,5,6) for selectively supplying and isolating fuel from the reservoir means (8) to the fuel supply means (33), characterised in that, the heat conducting means (22) is connected directly to the fuel supply means (33) for delivering fuel to the combustion chamber (23) and forms an internal support (22) which solely carries the soldering tip (3), and the isolating means (58,59) comprises a sealing member (59) sealing an orifice (58) through a transverse member (44) in the duct (12), the orifice (58) communicating with the reservoir means (8), a carrier (60) mounted in the duct (12) and carrying the sealing member (59), the carrier (60) having a bore (61) extending from the isolating means (58,59) for accommodating the passage of fuel gas therethrough, the carrier (60) being slidable longitudinally in the duct (12) from a position with the sealing member (59) spaced apart from the orifice (58) to a position sealing the orifice (58), the carrier (60) being operable by a camming member (67) which is slidable in the duct (12) and extends around the carrier (60), and a thumb operated slider (66,70) slidable longitudinally in the handle housing (2,5,6) being co-operable with the camming member (67) for sliding the carrier (60) in the duct (12).

2. A soldering tool as claimed in Claim 1 characterised in that the internal support (22) is in the form of a hollow manifold (22), and the means for relatively evenly distributing the fuel from the internal support (22) through the catalytic element (14) comprises a plurality of radial holes (26) in the hollow manifold (22) and corresponding exhaust outlets (31) for exhausting burnt gases being located at 60 intervals around the housing (20).

3. A soldering tool as claimed in Claim 1 or 2 characterised in that the carrier (60) is spring biased (82) in an upstream direction towards the orifice (58), and the camming member (67) is provided by a cylindrical sleeve (67), the downstream end of which bears on a radial face (76) extending from the carrier (60), and the other end of the cylindrical sleeve (67) terminating in a helical camming surface (77) bearing on a corresponding camming surface (78) on the handle housing (2,5,6), and the thumb operated slider member (66,70) is co-operable with the camming member (67) by a spud (80) extending from the outer surface of the cylindrical sleeve (67), the spud (80) being engagable with a helical groove (81) in the thumb operated slider member.

4. A soldering tool as claimed in any preceding claim characterised in that the combustion chamber (23) is annular and surrounds the internal support (22).

5. A soldering tool as claimed in any preceding claim characterised in that the internal support (22) is mounted on a fuel supply pipe (33) which acts to connect the soldering tip (3) and combustion chamber (23) to the handle housing (2,5,6).

6. A soldering tool as claimed in Claim 5 characterised in that the fuel supply pipe (33) is releasably connected to the handle housing (2,5,6).

7. A soldering tool as claimed in Claim 6 characterised in that the fuel supply pipe (33) is releasably held in place in the handle housing (2,5,6) by a screw threaded gland member (93).

8. A soldering tool as claimed in any preceding claim characterised in that a removable cover (16) is provided to cover the soldering tip (3) and is releasably engagable with the handle housing (2,5,6).

9. A soldering tool as claimed in Claim 8 characterised in that said removable cover (16) is provided with a pocket clip (17).

10. A soldering tool as claimed in Claim 8 or Claim 9 characterised in that said cover (16) incorporates a manually operable ignitor mechanism (95) for the fuel.

11. A soldering tool as claimed in any of Claims 8 to 10 characterised in that the cover (16) abuts the thumb operated slider (70), to retain the slider (70) with the carrier (60) in the closed position.

12. A soldering tool as claimed in any preceding claim characterised in that the reservoir means (8) is a refillable reservoir (8).

13. A soldering tool as claimed in any preceding claim characterised in that the handle housing (2,5,6) houses means (88) for mixing air with fuel gas, and means (48,49) for regulating the flow of fuel gas.

14. A soldering tool as claimed in any one of the preceding claims having overall dimensions small enough to fit into a normal sized pocket in the user's clothing.

## Patentansprüche

1. Lötwerkzeug mit einem länglichen Handgriffgehäuse (2, 5, 6), das Speichermittel (8) für Brennstoff ausbildet, ferner mit einer mit dem Handgriffgehäuse (2, 5, 6) verbundenen Lötspitze (3), die einen Spitzenabschnitt (19) und ein Spitzengehäuse (20) aufweist, das sich vom Spitzenabschnitt (19) aus nach hinten zum Handgriffgehäuse (2, 5, 6) erstreckt und eine Brennkammer (23), in der ein katalytisches Element (14) angeordnet ist, ferner eine Einrichtung (33) zum Zuführen von Brennstoff zum katalytischen Element (14) zum Erhitzen der Lötspitze, Mittel (26, 31) zur relativ gleichmäßigen Brennstoffverteilung an das katalytische Element sowie Wärmeleitmittel vorsieht, die innerhalb der Brennkammer (23) angeordnet sind und sich durch sie hindurch bis zum Spitzenabschnitt (19) erstrecken, um Wärme von der Brennkammer (23) zum Spitzenabschnitt (19) zu leiten, wobei das Handgriffgehäuse (2, 5, 6) eine Leitung (12) zur Zuleitung von Brennstoff aus den Speichermitteln (8) zur Brennstoff-Zuführeinrichtung (33) festlegt und im Handgriffgehäuse (2, 5, 6) eine Isoliereinrichtung (58, 59) zum wahlweisen Zuführen und Isolieren des Brennstoffes aus bzw. in den Speichermitteln (8) zur bzw. gegenüber der Brennstoff-Zuführeinrichtung (33) vorgesehen ist, dadurch gekennzeichnet, daß die Wärmeleitmittel (22) unmittelbar an die Brennstoff-Zuführeinrichtung (33) zum Zuführen von Brennstoff zur Brennkammer (23) angeschlossen sind und einen innenliegenden Träger (22) ausbilden, der allein die Lötspitze (3) trägt, und daß die Isoliereinrichtung (58, 59) ein Dichtungsglied (59) aufweist, das eine Öffnung (58) durch ein Querteil (44) in der Leitung (12) abdichtet, wobei die Öffnung (58) mit den Speichermitteln (8) in Verbindung steht, und daß ein Schlitten (60) in der Leitung (12) angebracht ist, der (60) das Dichtungsglied (59) trägt und eine Bohrung (61) aufweist, die von der Isoliereinrichtung (58, 59) aus verläuft, um durch den Schlitten hindurch den Durchgang von Brenngas zu ermöglichen, und der (60) in der Leitung (12) in Längsrichtung von einer Lage aus, in der das Dichtungsglied (59) mit Abstand von der Öffnung (58) angeordnet ist, zu einer Lage verschiebbar ist, welche die Öffnung (58) abdichtet, und der (60) durch ein Eingriffsglied (67) betätigbar ist, das in der Leitung (12) verschiebbar ist und sich um den Schlitten (60) herum erstreckt, wobei ein manuell betätigtes Gleitstück (66, 70), das im Handgriffgehäuse (2, 5, 6) in Längsrichtung verschieblich ist, mit dem Eingriffsglied (67) zum Verschieben des Schlittens (60) in der Leitung (12) zusammenwirken kann.

2. Lötwerkzeug nach Anspruch 1, dadurch gekennzeichnet, daß der innenliegende Träger (22) die Form eines hohen Verteilers (22) aufweist und daß die Mittel zur relativ gleichmäßigen Verteilung des Brennstoffs aus dem innenliegenden Träger (22) durch das katalytische Element (14) hindurch eine Vielzahl von radialen Löchern (26) in dem hohlen Verteiler (22) und zum Ausströmen verbrannter Gase entsprechende Abgasauslässe (31), die in 60_{°}-Abständen um das Gehäuse (20) herum angeordnet sind, umfassen.

3. Lötwerkzeug nach Anspruch 1 oder 2, dadurch gekennzeichnet, daß der Schlitten (60) unter Federkraft (82) gasstromaufwärts in Richtung gegen die Öffnung (58) vorgespannt ist und daß das Eingriffsglied (67) durch eine zylindrische Schale (67) gebildet ist, deren stromabwärtiges Ende gegen eine Radialfläche (76) anläuft, die vom Schlitten (60) aus vorragt, und deren (67) anderes Ende in eine schraubenförmige Eingriffsfläche (77) ausläuft, die gegen eine entsprechend ausgebildete Eingriffsfläche (78) am Handgriffgehäuse (2, 5, 6) anlegbar ist, und daß das manuell betätigbare Gleitstückteil (66, 70) mit dem Eingriffsglied (67) über einen Eingriffsnocken (80) zusammenwirken kann, der von der Außenoberfläche der zylindrischen Schale (67) aus verläuft und in eine schraubenförmige Nut (81) in dem manuell betätigbaren Gleitstück eingreift.

4. Lötwerkzeug nach einem der vorhergehenden Ansprüche, dadurch gekennzeichnet, daß die Brennkammer (23) ringförmig ist und den innenliegenden Träger (22) umgibt.

5. Lötwerkzeug nach einem der vorhergehenden Ansprüche, dadurch gekennzeichnet, daß der innenliegende Träger (22) an einem Brennstoff-Zuführrohr (33) angebracht ist, das zur Verbindung der Lötspitze (3) und Brennkammer (23) mit dem Handgriffgehäuse (2, 5, 6) dient.

6. Lötwerkzeug nach Anspruch 5, dadurch gekennzeichnet, daß das Brennstoff-Zuführrohr (33) lösbar mit dem Handgriffgehäuse (2, 5, 6) verbunden ist.

7. Lötwerkzeug nach Anspruch 6, dadurch gekennzeichnet, daß das Brennstoff-Zuführrohr (33) durch ein mit einem Schraubgewinde versehenes Stopfbüchsenteil (93) lösbar in seiner Lage im Handgriffgehäuse (2, 5, 6) gehalten ist.

8. Lötwerkzeug nach einem der vorhergehenden Ansprüche, dadurch gekennzeichnet, daß ein abnehmbarer Deckel (16) zum Abdecken der Lötspitze (3) und zum lösbaren Eingriff mit dem Handgriffgehäuse (2, 5, 6) vorgesehen ist.

9. Lötwerkzeug nach Anspruch 8, dadurch gekennzeichnet, daß der abnehmbare Deckel (16) mit einem Taschen-Klemmbügel (17) versehen ist.

10. Lötwerkzeug nach Anspruch 8 oder Anspruch 9, dadurch gekennzeichnet, daß in den Deckel (16) ein handbetätigbarer Zündmechanismus (95) für den Brennstoff gelassen ist.

11. Lötwerkzeug nach einem der Ansprüche 8 bis 10, dadurch gekennzeichnet, daß der Deckel (16) gegen das manuell betätigbare Gleitstück (70) anliegt, um das Gleitstück (70) mit dem Schlitten (60) in der Verschlußlage zu halten.

12. Lötwerkzeug nach einem der vorhergehenden Ansprüche, dadurch gekennzeichnet, daß die Speichermittel (8) aus einem nachfüllbaren Aufnahmereservoir (8) bestehen.

13. Lötwerkzeug nach einem der vorhergehenden Ansprüche, dadurch gekennzeichnet, daß im Handgriffgehäuse (2, 5, 6) eine Einrichtung (88) zum Mischen von Luft mit Brenngas und eine Einrichtung (48, 49) zur Regulierung des Brenngasstromes aufgenommen ist.

14. Lötwerkzeug nach einem der vorhergehenden Ansprüche, mit Gesamtabmessungen, die klein genug sind, um in eine normal bemessene Tasche in der Kleidung des Benutzers zu passen.

## Revendications

1. Outil de soudure comportant un boîtier (2, 5, 6) formant poignée allongée constituant des moyens (8) formant réservoir de combustible, une pointe de fer à souder (3) reliée au boîtier (2, 5, 6) formant poignée, la pointe de fer à souder (3) comportant une partie (19) formant pointe et un réceptacle (20) de pointe s'étendant vers l'arrière en direction du boîtier (2, 5, 6) formant poignée à partir de la partie (19) formant pointe, qui fournit une chambre de combustion (23) dans laquelle un élément catalytique (14) est situé, des moyens (33) pour alimenter le combustible vers l'élément catalytique (14) pour chauffer la pointe de fer à souder, des moyens (26, 31) pour distribuer de manière relativement régulière le combustible vers l'élément catalytique, et des moyens conducteurs de la chaleur situés à l'intérieur de la chambre de combustion (23) et s'étendant à travers celle-ci vers la partie (19) formant pointe pour conduire la chaleur depuis la chambre de combustion (23) vers la partie (19) formant pointe, le boîtier (2, 5, 6) formant poignée définissant un conduit (12) pour alimenter le combustible provenant des moyens (8) formant réservoir vers les moyens (33) d'alimentation de combustible, et des moyens d'isolement (58, 59) étant agencés dans le boîtier (2, 5, 6) formant poignée pour alimenter et isoler de manière sélective le combustible provenant des moyens (8) formant réservoir vers les moyens (33) d'alimentation de combustible, caractérisé en ce que les moyens (22) conducteurs de la chaleur sont reliés directement aux moyens (33) d'alimentation de combustible pour délivrer du combustible vers la chambre de combustion (23) et forment un support intérieur (22) qui supporte uniquement la pointe de fer à souder (3), et les moyens d'isolement (58, 59) comportent un élément d'obturation (59) assurant l'obturation d'un orifice (58) situé à travers un élément transversal (44) du conduit (12), l'orifice (58) communiquant avec les moyens (8) formant réservoir, un support (60) monté dans le conduit (12) et supportant l'élément d'obturation (59), le support (60) ayant un alésage (61) s'étendant à partir des moyens d'isolement (58, 59) pour recevoir de manière traversante le passage de gaz combustible, le support (60) pouvant coulisser longitudinalement dans le conduit (12) à partir d'une position dans laquelle l'élément d'obturation (59) est écarté de l'orifice (58) vers une position assurant l'obturation de l'orifice (58), le support (60) pouvant être actionné par un mécanisme à cames (67) qui peut coulisser dans le conduit (12) et s'étend autour du support (60), et un dispositif formant coulisseau (66, 70) actionné par le pouce pouvant coulisser longitudinalement dans le boîtier (2, 5, 6) formant poignée pouvant coopérer avec le mécanisme à cames (67) pour faire coulisser le support (60) dans le conduit (12).

2. Outil de soudure selon la revendication 1, caractérisé en ce que le support intérieur (22) a la forme d'un collecteur (22) creux, et les moyens pour distribuer de manière relativement régulière le combustible à partir du support intérieur (22) à travers l'élément catalytique (14) comportent plusieurs trous radiaux (26) du collecteur creux (22) et des sorties d'échappement (31) correspondantes pour l'échappement des gaz brûlés, situées selon des intervalles de 60 _{°} autour du boîtier (20).

3. Outil de soudure selon la revendication 1 ou 2, caractérisé en ce que le support (60) est rappelé par un ressort (82) dans une direction amont vers l'orifice (58), et le mécanisme à cames (67) est fourni par un manchon cylindrique (67) dont l'extrémité aval comporte une face radiale (76) s'étendant à partir du support (60), et l'autre extrémité du manchon cylindrique (67) se termine par une surface de came hélicoïdale (77) portant sur une surface de came correspondante (78) située sur le boîtier (2, 5, 6) formant poignée, et le dispositif formant coulisseau (66, 70) actionné par le pouce peut coopérer avec le mécanisme à cames (67) par l'intermédiaire d'une spatule (80) s'étendant à partir de la surface extérieure du manchon cylindrique (67), la spatule (80) pouvant venir en prise avec une gorge hélicoïdale (80) située dans le dispositif formant coulisseau actionné par un pouce.

4. Outil de soudure selon l'une quelconque des revendications précédentes, caractérisé en ce que la chambre de combustion (23) est annulaire et entoure le support intérieur (22).

5. Outil de soudure selon l'une quelconque des revendications précédentes, caractérisé en ce que le support intérieur (22) est monté sur une canalisation (23) d'alimentation de combustible qui agit pour relier la pointe de fer à souder (3) et la chambre de combustion (23) au boîtier (2, 5, 6) formant poignée.

6. Outil de soudure selon la revendication 5, caractérisé en ce que la canalisation (33) d'alimentation de combustible est reliée de manière libérable au boîtier (2, 5, 6) formant poignée.

7. Outil de soudure selon la revendication 6, caractérisé en ce que la canalisation (33) d'alimentation de combustible est maintenue de manière amovible en position dans le boîtier (2, 5, 6) formant poignée par un élément (93) formant presse-étoupe fileté.

8. Outil de soudure selon l'une quelconque des revendications précédentes, caractérisé en ce qu'un couvercle amovible (16) est agencé pour recouvrir la pointe de fer à souder (3) et peut être mis en prise de manière libérable avec le boîtier (2, 5, 6) formant poignée.

9. Outil de soudure selon la revendication 8, caractérisé en ce que ledit couvercle (16) amovible est muni d'une attache (17) de poche.

10. Outil de soudure selon la revendication 8 ou 9, caractérisé en ce que ledit couvercle (16) comporte un mécanisme d'allumage (95) du combustible, pouvant être actionné de manière manuelle.

11. Outil de soudure selon l'une quelconque des revendications 8 à 10, caractérisé en ce que le couvercle (16) vient en butée avec le dispositif formant coulisseau (70) actionné par un pouce, pour retenir le mécanisme formant coulisseau (70), le support (60) étant dans la position fermée.

12. Outil de soudure selon l'une quelconque des revendications précédentes, caractérisé en ce que les moyens (8) formant réservoir sont constitués d'un réservoir (8) pouvant être rempli à nouveau.

13. Outil de soudure selon l'une quelconque des revendications précédentes, caractérisé en ce que le boîtier (2, 5, 6) formant poignée reçoit des moyens (88) pour mélanger l'air au gaz combustible, des moyens (48, 49) pour réguler l'écoulement du gaz combustible.

14. Outil de soudure selon l'une quelconque des revendications précédentes, ayant des dimensions globales suffisamment petites pour s'adapter dans une poche dimensionnée de manière normale d'un vêtement d'utilisateur.
